# EUROPEAN PATENT APPLICATION

(11) **EP 0 641 815 A1**
(43) Date of publication of application: **08.03.1995**
(21) Application number: 94306375.0
(22) Date of filing: 30.08.1994
(51) Int. Cl.: C08G 65/32, C08G 65/48

(54) **Silylated oxyalkylene polymers**

(30) Priority: 04.09.1993 GB 9318381; 29.10.1993 GB 9322368
(71) Applicant: DOW CORNING S.A., B-7180 Seneffe (BE)
(72) Inventor: Leempoel, Patrick, B-1180 Brussels (BE); Lloyd, Norman Christopher, B-1382 Lasnes (BE)
(74) Representative: Bullows, Michael

(57) **Abstract**

A method of producing organic polymer having oxyalkylene chain units and reactive -SiR_{(3-b)}X_{b} groups wherein R represents a monovalent hydrocarbon group, X refers to an oximo group and b has the value 1, 2 or 3. It is prepared by reacting a hydroxy functional oxyalkylene polymer with an oximosilane SiR₍₄₋ₐ₎Xₐ wherein a has the value 1 to 4. The polymer shows good hydrolytic stability and may be used in moisture curable sealants.

## Description

This invention is concerned with silylated polymers.

It is known to provide polyoxyalkylenes with terminal groups containing a silicon atom and silicon-bonded hydrolysable groups through which curing reaction may be induced.

Numerous methods of preparing such polymers by introducing hydrolysable silyl groups into the molecular chain have been proposed in the literature. For example, a silane having silicon-bonded hydrolysable groups X and a silicon-bonded hydrogen atom of the general formula X(_{3-b})R_{b}SiH may be reacted with a polyether having groups including a -C=C- bond. There may be one or more -C=C- bonds present in the polyether molecule and these may be located as terminal groups on the chain or as pendant groups. In the case where there is one terminal -C=C-group, the other terminal group or groups may be hydroxyl. Materials of this general type have been mentioned in several patent specifications of which the earliest known to the applicant is G.B. 1 058 385. G.B. 1 058 385 specifies various organic groups which may provide the hydrolysable group, namely hydrocarbonoxy, halohydrocarbonoxy, acyloxy, haloge-nated acyloxy, primary, secondary or tertiary amino radical in which the substituents are hydrocarbon or halohydrocarbon radicals or a diorgano-substituted isocyanoxy radical of the general formula RₓR_{y}C=N-O- in which Rₓ and R_{y} are the same or different and are each a hydrocarbon or halohydrocarbon radical. Numerous subsequent proposals for materials and methods of making them have been described in the art. These proposals include methods of preparing organic polymers by introducing hydrolysable silyl groups into the molecular chain which include, for example, those in which (1) a monomer having an epoxy group and a silicon containing hydrolysable group e.g. γ-glycidoxypropylmethyldimethoxysilane or γ-glycidoxytrimethoxysilane, is copolymerised with an alkylene oxide e.g. propylene oxide or ethylene oxide to produce a polyether having a hydrolysable silicon-containing group in the side chains; (2) a polyoxyalkylene glycol such as polyoxypropylene polyol or polytetramethylene diol is reacted with a compound having a functional group eg an isocyanato group, capable of reacting with a hydroxyl group of the polyoxyalkylene polyol and having a silicon containing hydrolysable group, thereby introducing a hydrolysable silicon containing group into the polymer chain end and (3) a polyisocyanate compound is reacted with a hydroxyl group of a polyoxyalkylene polyol as in (2) to produce a compound having an isocyanato group and the produced compound reacted with a compound having both a silicon containing hydrolysable group and a group capable of reacting with the isocyanato group such as a carboxyl, hydroxyl, mercapto or amino group, thereby introducing a hydrolysable silicon containing group into the polymer chain end.

Prior art methods of preparing modified polyethers of which applicant is aware are directed to preparation of polymers in which the hydrolysable silyl group is attached to the organic polymer molecular chain through a linkage other than ≡Si-O-C, for example a silicon-carbon bond. The methods disclosed in the art which are known to applicant generally employ energy intensive processes or a plethora of raw materials in order to produce polymer with at least one silicon-containing group. See, for example, U.S. 4,631,322, U.S. 4,873,272, U.S. 4,847,357 and U.S. 4,786,667.

It is one of the various objects of this invention to provide an improved process for making silyl modified organic polymers based on polyoxyalkylene polymers.

We have now found that certain silyl modified polyethers in which the silyl end cap is attached to the molecule through an ≡Si-O-C bond may be made by a simple procedure which requires only small input of energy to the reaction system.

The present invention provides in one of its aspects a method of producing an organic polymer having oxyalkylene chain units and at least one unit -SiR_{(3-b)}X_{b} attached thereto which method comprises procuring a polyoxyalkylene polymer having at least one reactive hydroxyl group per molecule and mixing with the polymer a silane of the formula SiR₍₄₋ₐ₎Xₐ under conditions to bring about condensation reaction between a hydroxyl group of the polymer and the silane, wherein R represents a monovalent hydrocarbon group, X represents an oximo group, a has a value of 1, 2, 3 or 4 and b has the value 1, 2 or 3.

In a method according to the invention the polyoxyalkylene polymer may be linear or branched and may have one, two, three or more reactive hydroxyl groups per molecule and thus may be capable of formation of one, two or three siloxane linkages with the silane. The polyoxyalkylene polymer may be a homopolymer or a copolymer and may be chosen from numerous known materials. The polyoxyalkylene polymer may thus contain repeating or alternating units ⁅CHR'(CH₂)ₚ-O⁆ₙ where R' represents a hydrogen atom or a methyl group and p has a value of 1 or 2 (i.e. oxyethylene, oxypropylene or oxybutylene units) and n has a value from 5 to 350 and may conveniently have two hydroxyl groups per molecule as terminal groups. Preferred materials are liquid dihydroxy materials having a viscosity in the range 100 to 1100 mPa.s and having oxyethylene, oxypropylene or oxybutylene units in the molecular chain. Where low raw material cost, adhesion, and flexibility of the cured composition are desirable, we prefer to employ an α,ω dihydroxy polyoxypropylene glycol of molecular weight of about 2000 to about 4000 to make the modified polymers.

The silane SiR₍₄₋ₐ₎Xₐ used in a method according to the invention may contain one or more monovalent hydrocarbon groups which may be selected from, for example, the group consisting of alkyl groups, for example methyl, ethyl or propyl, alkenyl groups, for example vinyl, allyl or hexenyl, aryl groups, for example phenyl or aralkyl groups or cyclohexenyl. One or more groups X is present in the silane, those having two or more oximo groups X being preferred in those cases where the resultant polymer is intended to undergo cure in presence of atmospheric moisture. The oximo silanes are capable of reacting with polyoxyalkylene glycols at an acceptable rate at room temperature without a catalyst. In its simplest form therefore, the reaction may be carried out at room temperature between a hydroxypolyoxyalkylene and a silane having from 2 to 4 oximo silane groups, with elimination of hydrolysis product. The reverse reaction is also possible at room temperature in presence of certain materials, for example those containing primary or secondary amino nitrogen atoms.

Typical examples of suitable silanes are the di-, tri- and tetra-oximo silanes, for example methyltrioximosilane, vinyltrioximosilane and tetraoximosilane. Typically, a method according to the invention may be carried out according to the scheme 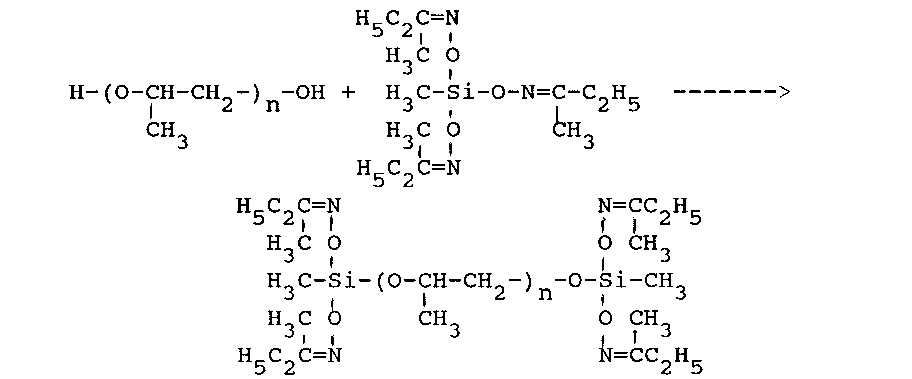
by admixture of the materials at room temperature. Preferred modified polymers made by a method according to the invention are according to the general formula 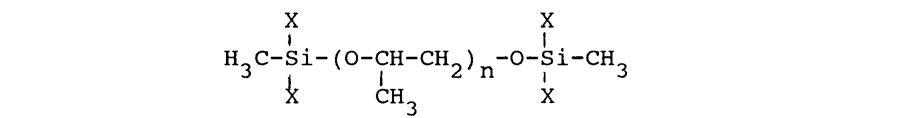
where n has a value in the range 5 to 350 so that the oxypropylene chain has a molecular weight in the range of about 300 to about 20000. Preferred materials are those wherein n has a value less than 180, for example in the range 5 to 70, i.e. a molecular weight in the range 300 to 4000 and a viscosity of about 500 to about 1100 mPa.s. The most preferred materials have oxypropylene chains of molecular weight of about 2,000 to 4,000. These polymers cure upon exposure to moisture by way of hydrolysis of the hydrolysable oximo groups X.

Polymers made by a method according to the invention include at least one unit -C-O-SiR_{(3-b)}X_{b} in which b has the value 1, 2 or 3 due to consumption of one group X by condensation with the hydroxy polymer. Resultant polymers containing one or more group X may be caused to undergo further reaction by condensation of the group X in similar fashion to the alkoxy and oximo terminated polysiloxanes, whereas those containing one or more alkenyl groups R may undergo further reaction by hydrosilylation in similar fashion to the alkenyl terminated polysiloxane. The polymers may be blended with others, e.g. reactive polysiloxanes and may be compounded and used for similar purposes to other curable organic polymers. For example, a moisture curable composition may be formulated using the oximo bearing polymer by inclusion of one or more additives for modifying properties of the composition. For example, there may be incorporated into the composition plasticisers, extenders, pigments such as titanium dioxide, carbon black and iron oxide, and processing and adhesion promoting additives. Plasticisers and extenders which may be employed include the organic phthalate esters and non-functional end-capped polyalkylene oxides as well as the trimethylsilyl end capped polydimethylsiloxane fluids (PDMS). Adhesion promoting additives which may be employed for improving the adhesion of the cured composition to glass, metal or other substrates include, for example, epoxy, tertiary amino and mercapto functional alkoxysilanes and certain reaction products and or mixtures thereof. Preparation of such compositions can be effected by known mixing techniques. They may be formulated into single package or multiple package configurations as required. In the following Example the parts and percentages are expressed by weight.

### Example 1

A dioximomethylsilyl end-blocked polyoxypropylene (Polymer A) having oximosilyl end caps attached to a polyoxyalkylene chain by Si-O-C was prepared by mixing a polyoxypropylene glycol of molecular weight about 4,000 with a stoichiometric excess of the oximosilane methyltri(methylethyloximo) silane. The mixture was allowed to react at room temperature for 30 minutes.

The polymer produced was subjected to NMR analysis (Si²⁹ and C¹³) and its structure identified as

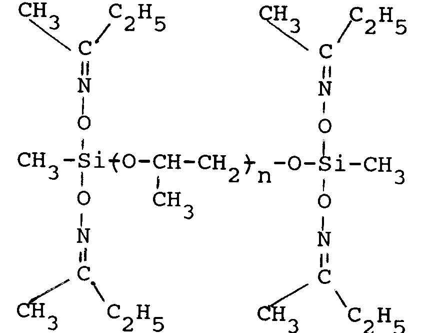

Table 1 shows some properties of an example sealant composition made using Polymer A and other materials in the proportions shown in Table 1.

**Table 1**

| Ingredient | Example Composition 1 |
|---|---|
| Polymer A | 67 |
| Silicone Polymer | 33 |
| Plasticiser | 50 |
| Filler 1 | 120 |
| Filler 2 | 80 |
| Filler 3 | 20 |
| UV Stabiliser | 1 |
| Oximosilane 1 | 3 |
| Physical Properties | |
| Extrusion (g/min) | 2190 |
| Tensile Strength (MPa) | 0.5 |
| Elongation at break (%) | 363 |
| Modulus at 100% (MPa) | 0.3 |
| Hardness (Shore A) | 20 |
| Reversion | |
| (1 week 50°C water) | Yes |
| Paintability:Spreading | |
| Latex | Good |
| Acrylic | Poor |
| Alkyd | Good |
| Paintability:Adhesion | |
| Latex | 20 |
| Acrylic | 100 |

The Silicone Polymer used was a silanol terminated polydiorganosiloxane according to the general formula HO(R₂)SiOₛH in which each R represents a methyl group and s has a value such that the viscosity of the polymer is about 50,000 mm²/s at 25°C. Oximosilane 1 was a mixture of 80% methyl-trioximo and 20% methyldioximomonoalkoxy silane. The plasticiser used was dioctyl phthalate. Filler 1 was a precipitated calcium carbonate. Filler 2 was a ground calcium carbonate. Filler 3 was titanium dioxide.

## Claims

1. A method of producing an organic polymer having oxyalkylene chain units and at least one unit -SiR_{(3-b)}X_{b} attached thereto which method comprises procuring a polyoxyalkylene polymer having at least one reactive hydroxyl group per molecule and mixing with the polymer a silane of the formula SiR₍₄₋ₐ₎Xₐ under conditions to bring about condensation reaction between a hydroxyl group of the polymer and the silane, wherein R represents a monovalent hydrocarbon group, X represents an oximo group, a has a value of 1, 2, 3 or 4 and b has the value 1, 2 or 3.

2. A method according to Claim 1 wherein the polyoxyalkylene polymer is linear.

3. A method according to Claim 1 wherein the polyoxyalkylene polymer has two reactive hydroxyl groups per molecule.

4. A method according to Claim 1 wherein the polyoxyalkylene polymer comprises oxypropylene units.

5. A method according to Claim 4 wherein the polyoxyalkylene polymer has a molecular weight in the range 2000 to 4000.

6. A method according to any one of the preceding claims wherein the group X is methylethyloximo and a has the value 2, 3 or 4.

7. A polymer when made by a method according to any one of the preceding claims.

8. A polymer according to the general formula 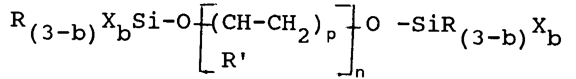 wherein R represents a methyl or ethyl group, R' represents H or CH₃, X represents an oximo group, b has the value 1, 2 or 3, n has a value of from 5 to 350 and p has the value 1 or 2.

9. A polymer according to Claim 8 wherein n has a value less than 180.
